# EUROPÄISCHE PATENTANMELDUNG

(11) **EP 1 256 748 A2**
(43) Veröffentlichungstag der Anmeldung: **13.11.2002**
(21) Anmeldenummer: 02010098.8
(22) Anmeldetag: 07.05.2002
(51) Int. Cl.: F16J 15/32

(54) **Dichtring**

(30) Priorität: 12.05.2001 DE 10123203
(71) Anmelder: Carl Freudenberg KG, 69469 Weinheim (DE)
(72) Erfinder: Rapp, Oskar, 52200 Humes (FR); Baudry, Alain, 52360 Neuilly-Leveque (FR)

(57) **Zusammenfassung**

Dichtring, umfassend einen Tragkörper (1) aus polymerem Werkstoff und zumindest eine dynamisch beanspruchte Dichtlippe (2), die mit dem Tragkörper (1) verbunden ist, wobei der Tragkörper (1) auf der der Dichtlippe (2) radial abgewandten Seite eine im Wesentlichen nutförmige, umfangsseitig in sich geschlossen ausgebildete Ausnehmung (3) aufweist, wobei in der Ausnehmung (3) eine statisch beanspruchte Dichtung (4) angeordnet ist und wobei der Tragkörper (1) und die Dichtlippe (2) aus unterschiedlichen polymeren Werkstoffen bestehen. Die Dichtung (4) ist separat erzeugt und besteht aus einem sowohl vom Werkstoff des Tragkörpers (1) als auch vom Werkstoff der Dichtlippe (2) abweichenden polymeren Werkstoff.

## Beschreibung

Die Erfindung betrifft einen Dichtring, umfassend einen Tragkörper aus polymerem Werkstoff und zumindest eine dynamisch beanspruchte Dichtlippe, die mit dem Tragkörper verbunden ist, wobei der Tragkörper auf der der Dichtlippe radial abgewandten Seite eine im Wesentlichen nutförmige, umfangsseitig in sich geschlossen ausgebildete Ausnehmung aufweist, wobei in der Ausnehmung eine statisch beanspruchte Dichtung angeordnet ist und wobei der Tragkörper und die Dichtlippe aus unterschiedlichen polymeren Werkstoffen bestehen.

### Stand der Technik

Ein solcher Dichtring ist aus der DE 27 09 000 A1 bekannt. Demnach bestehen der Tragkörper und die Dichtlippe jeweils aus unterschiedlichen polymeren Werkstoffen mit voneinander abweichenden Elastizitätsmodulen, wobei die Dichtung und die Dichtlippe aus demselben Werkstoff bestehen. Die Aufgabe, die durch einen derart ausgebildeten Dichtring gelöst werden soll, wird darin gesehen, dass der vorbekannte Dichtring in einfacher Weise herstellbar ist.

Dabei ist allerdings zu beachten, dass die dynamisch beanspruchte Dichtlippe häufig einem höheren Verschleiß unterliegt als die statisch beanspruchte Dichtung und dadurch übereinstimmende Werkstoffe für Dichtlippe und Dichtung von Nachteil sind. Weist beispielsweise die dynamisch beanspruchte Dichtlippe gute Gebrauchseigenschaften während einer langen Gebrauchsdauer auf, ist eine aus gleichem Werkstoff bestehende Dichtung meist zu hart, so dass die statische Abdichtung wenig zufriedenstellend ist. Wird demgegenüber ein für die statische Abdichtung geeigneter Werkstoff für die Dichtung gewählt, weist ein derartiger Werkstoff, als Dichtlippen-Werkstoff eingesetzt, zumeist einen unerwünscht hohen abrasiven Verschleiß auf und daraus resultierend nur eine vergleichsweise geringe Gebrauchsdauer.

### Darstellung der Erfindung

Der Erfindung liegt die Aufgabe zugrunde, einen Dichtring der eingangs genannten Art derart weiterzuentwickeln, dass die zuvor beschriebenen Nachteile vermieden werden und dass der Dichtring sowohl im Bereich der Dichtlippe als auch im Bereich der Dichtung insgesamt gleichbleibend gute Gebrauchseigenschaften während einer langen Gebrauchsdauer aufweist.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, dass die Dichtung separat erzeugt ist und aus einem sowohl vom Werkstoff des Tragkörpers als auch vom Werkstoff der Dichtlippe abweichenden polymeren Werkstoff besteht. Hierbei ist von Vorteil, dass die Werkstoffe für Tragkörper, Dichtlippe und Dichtung jeweils derart auswählbar sind, dass die jeweiligen Gebrauchseigenschaften von Tragkörper, Dichtlippe und Dichtung dem jeweiligen Anwendungsfall optimal angepasst sind. Der Tragkörper besteht aus einem zähharten polymerem Werkstoff, wahlweise aus einem thermoplastischen oder einem duroplastischen Werkstoff, wobei in einem ersten Verfahrensschritt zur Herstellung des Dichtrings die Dichtlippe, die bevorzugt aus einem Fluorpolymer, beispielsweise einem PTFE-Compound besteht, am Tragkörper festgelegt wird.
In einem zweiten Verfahrensschritt wird die vormontierbare Einheit, bestehend aus Tragkörper und Dichtlippe mit der Dichtung verbunden, wobei der Werkstoff der Dichtung für die meisten Anwendungsfälle wesentlich weicher als der Werkstoff der Dichtlippe ist.

Von Vorteil ist nicht nur die jeweilige optimale Werkstoffauswahl zur Anpassung an die jeweils technischen Anforderungen der Bauteile, sondern auch eine Reduzierung der Herstellungskosten dadurch, dass beispielsweise ein vergleichsweise teurer Werkstoff nur für die dynamisch beanspruchte Dichtlippe zur Anwendung gelangt, demgegenüber jedoch nicht zur Herstellung der Dichtung. Für die Dichtung kann in technischer Hinsicht möglicherweise ein anderer, kostengünstigerer Werkstoff von Vorteil sein.

Der Dichtring kann in die Ausnehmung eingeschnappt und ungehaftet in dieser gehalten sein. Für ein möglichst einfaches Recycling des Dichtrings im Anschluss an seine Verwendung ist eine solche Ausgestaltung von hervorzuhebendem Vorteil.

Nach einer anderen Ausgestaltung besteht die Möglichkeit, dass der Dichtring gehaftet innerhalb der Ausnehmung angeordnet ist. Für eine besonders exakte räumliche Zuordnung der Dichtung zum Tragkörper ist eine solche Ausgestaltung von Vorteil.

Generell ist die Verwendung einer separat erzeugten Dichtung zur statischen Abdichtung einem Dichtlack im Bereich des Außenumfangs des Tragkörpers in funktionstechnischer Hinsicht vorzuziehen. Die separat erzeugte Dichtung kann auch bei größeren Wärmedehnungen die Bohrung, in der der Dichtring angeordnet ist, sicher abdichten. Außerdem können nach Gebrauch des Dichtrings die Dichtung und der Tragkörper sortenrein und getrennt voneinander entsorgt werden.

Die Härte der Dichtung ist für die meisten Anwendungsfälle vergleichsweise geringer als die Härte der Dichtlippe. Bevorzugt beträgt die Härte des Werkstoffs der Dichtlippe zumindest 54 Shore D und die Härte der Dichtung höchstens 90 Shore A. Hierbei ist von Vorteil, dass die dynamisch beanspruchte Dichtlippe im Vergleich zur Dichtung an die höheren mechanischen Belastungen angepasst ist. Die vergleichsweise weichere Dichtung dichtet das Gehäuse, das den Dichtring umschließt, zuverlässig statisch ab.

Die Dichtlippe kann beispielsweise aus einem Fluorpolymer bestehen. Die Dichtung kann demgegenüber aus einem elastomeren Werkstoff bestehen. Als Fluorpolymer kann ein PTFE-Compound zur Anwendung gelangen. Hierbei ist von Vorteil, dass ein solcher Werkstoff nach einem vernachlässigbar geringen Anfangsverschleiß im Bereich seiner Oberfläche glasiert, dadurch sehr hart wird und während einer langen Gebrauchsdauer beispielsweise eine rotierende Welle zuverlässig abdichtet. Zur statischen Abdichtung zwischen Dichtring und Gehäuse eignen sich gummielastische, elastomere Werkstoffe besonders gut.

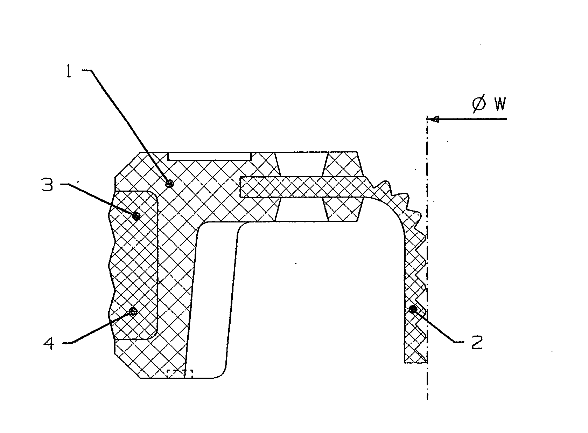

### Kurzbeschreibung der Zeichnung

Ein Ausführungsbeispiel des erfindungsgemäßen Dichtrings wird nachfolgend anhand der beigefügten Figur näher erläutert.

### Ausführung der Erfindung

In der Figur ist ein Dichtring in längs geschnittener Darstellung gezeigt, der vollständig aus polymerem Werkstoff besteht. Der Tragkörper 1 ist radial innenseitig mit der dynamisch beanspruchten Dichtlippe 2 verbunden, die eine hier nicht dargestellte Welle außenumfangsseitig dichtend umschließt. Radial außenseitig ist der Tragkörper 1 mit einer nutförmigen, umfangsseitig in sich geschlossenen Ausnehmung 3 versehen, in der die statisch beanspruchte Dichtung 4 angeordnet ist. Die Dichtung 4 ist, bezogen auf den Tragkörper 1 und die Dichtlippe 2, separat erzeugt.

In einem ersten Verfahrensschritt werden der Tragkörper 1 und die Dichtlippe 2 miteinander zu einer vormontierbaren Einheit verbunden. Diese vormontierbare Einheit, bestehend aus Tragkörper 1 und Dichtlippe 2, wird anschließend in einem zweiten Verfahrensschritt mit der Dichtung 4 zum beanspruchten Dichtring komplettiert.

In diesem Ausführungsbeispiel besteht die Dichtlippe 2 aus einem PTFE-Compound, die Dichtung 4 demgegenüber aus einem elastomeren Werkstoff. Der Tragkörper 1 kann wahlweise aus einem thermoplastischen oder duroplastischen Werkstoff bestehen.

Durch die Verwendung von jeweils an den Anwendungsfall angepassten Kunststoffen für Tragkörper 1, Dichtlippe 2 und Dichtung 4 ist der beanspruchte Dichtring kostengünstig herstellbar und weist ausgezeichnete Gebrauchseigenschaften während einer langen Gebrauchsdauer auf.

## Patentansprüche

1. Dichtring, umfassend einen Tragkörper aus polymerem Werkstoff und zumindest eine dynamisch beanspruchte Dichtlippe, die mit dem Tragkörper verbunden ist, wobei der Tragkörper auf der der Dichtlippe radial abgewandten Seite eine im Wesentlichen nutförmige, umfangsseitig in sich geschlossen ausgebildete Ausnehmung aufweist, wobei in der Ausnehmung eine statisch beanspruchte Dichtung angeordnet ist und wobei der Tragkörper und die Dichtlippe aus unterschiedlichen polymeren Werkstoffen bestehen, **dadurch gekennzeichnet, dass** die Dichtung (4) separat erzeugt ist und aus einem sowohl vom Werkstoff des Tragkörpers (1) als auch vom Werkstoff der Dichtlippe (2) abweichenden polymeren Werkstoff besteht.

2. Dichtring nach Anspruch 1, **dadurch gekennzeichnet, dass** die Härte der Dichtung (4) geringer als die Härte der Dichtlippe (2) ist.

3. Dichtring nach einem der Ansprüche 1 oder 2, **dadurch gekennzeichnet, dass** die Härte des Werkstoffs der Dichtlippe (2) zumindest 45 Shore D und die Härte der Dichtung (4) höchstens 90 Shore A beträgt.

4. Dichtring nach einem der Ansprüche 1 bis 3, **dadurch gekennzeichnet, dass** die Dichtlippe (2) aus einem Fluorpolymer besteht.

5. Dichtring nach einem der Ansprüche 1 bis 3, **dadurch gekennzeichnet, dass** die Dichtung (4) aus einem elastomeren Werkstoff besteht.
